# EUROPEAN PATENT SPECIFICATION

(11) **EP 1 608 694 B1**
(45) Date of publication and mention of the grant of the patent: **05.11.2008**
(21) Application number: 04732586.5
(22) Date of filing: 13.05.2004
(51) Int. Cl.: C08G 18/42, C08G 18/76

(54) **PROCESS FOR THE PREPARATION OF HIGH SOLIDS URETHANE ALKYDS**
VERFAHREN FÜR DIE HERSTELLUNG VON URETHAN-ALKYDHARZEN MIT HOHEM FESTSTOFFGEHALT
PROCESSUS DE PREPARATION D'ALKYDES URETHANE HAUTEMENT SOLIDES

(30) Priority: 16.05.2003 GB 0311245
(43) Date of publication of application: 28.12.2005
(73) Proprietor: PPG B.V., 1422 AD Uithoorn (NL)
(72) Inventor: HUYGHE, Olivier, B-7712 Herseaux (BE); VAN BUREN, Gerard, NL-3572 TX Utrecht (NL); KEMP, Johanes, Adrianus, Gerardus, NL-2408 PL Alphen a/d Rijn (NL); GILLARD, Michel, B-1348 Louvain-la-Neuve (BE)
(74) Representative: Smithson, Robert Alan
(86) International application number: PCT/EP2004/005172
(87) International publication number: WO 2004/101639

(56) References cited:
- EP-A- 0 357 128
- US-A- 4 116 902
- US-A- 5 252 648
- US-B1- 6 433 125

## Description

### Field of the invention

The invention relates to an improved method for the preparation of high solids urethane alkyds. The invention further relates to the obtained high solids urethane alkyds. In another aspect, the present invention also relates to the use of said high solid urethane alkyds as binders for coatings.

### Background of the invention

Urethane alkyds are analogous to the polyester alkyds. Polyester alkyds are prepared by esterifying polyalcohols and polycarboxylic acids or their anhydrides, usually also with fatty acids. Urethane alkyds are derived from substitution of di- or poly-isocyanate for a portion of the polycarboxylic acid component to achieve chain extension or grafting. Urethane alkyds are produced from base alkyds having excess hydroxy functionality. Urethane alkyds may be prepared in a similar manner to alkyds as described above, except that a polyisocyanate e.g. toluenediisocyanate fully or partly replaces the polycarboxylic acid.

Several processes are known as conventional techniques for the synthesis of said urethane alkyd. Examples of methods for the preparation of urethane alkyd can be found in U.S. Patent Nos. 4,026,850; 4.116,902; 4,222,911 and 4,609,706. One of the problems encountered during the preparation processes of the prior art is the use of solvents. The environmental burden and nealth problems caused by solvent emission impose the development of high solids or even solvent free resins, using solvent free processes. A further disadvantage of the prior art methods is that the urethane alkyds obtained are solvent based which clearly is a drawback.

US 6,433,125 discloses a method of forming a coating by reacting a reactive diluent, an alkyd resin and a polyisocyanate.

An object of the present invention is to provide a novel process capable of readily preparing high solid urethane alkyd in a high yield. Another object of the present invention is to provide a more direct method for the synthesis of such high solid urethane alkyd, with easy work-up procedures, and which is solvent free. A further object of the present invention is to provide a novel p ocess wherein the exposure to hazardous substance is reduced.

A yet further object of the present invention is to provide a novel process offering an improvement vis-à-vis of the disadvantages disclosed above.

### Summary of the invention

The present invention relates to a process for the preparation of urethane alkyds comprising the step of reacting an alkyd with a polyisocyanate in the presence of a reactive diluent, **characterized in that** the reactive diluent is inert toward said polyisocyanate.

According to another embodiment, said reactive diluent has an hydroxyl index of less than 10 mg KOH/g, preferably less than 3 mg KOH/g, more preferably less than 1 mg KOH/g.

The present invention further relates to urethane alkyds comprising the reaction product of an alkyd with a polyisocyanate compound in the presence of a reactive diluent being inert toward said polyisocyanate.

To ensure a good air- and physical drying of the final urethane alkyd, the starting alkyd should have a sufficiently high molecular weight, however, this lead to a high viscosity. High molecular weight alkyds, because of their high viscosity, are known to be not very reactive toward polyisocyanates. In order for the reaction to proceed, high temperatures are usually needed. However, polyisocyanate such as toluene diisocyanate are known to be hazardous chemicals that need to be handled at the lowest possible temperatures.

It was surprisingly found that by reacting a polyisocyanate with an alkyd in the presence of a reactive diluent being inert toward said polyisocyanate, high solid urethane alkyd could be easily synthesized even when high molecular weight alkyds were used. Furthermore, the process according to the invention allowed the reaction to be conducted at low temperatures thereby reducing the health hazard of the use of polyisocyanate. Moreover, although the reaction temperature was maintained low during the process urethane high solids urethane alkyds were produced in high yield.

### Detailed description of the invention

In a first aspect, the present invention relates to a new process for the synthesis of urethane alkyds wherein an alkyd is reacted with a polyisocyanate in the presence of a reactive diluent being inert toward said polyisocyanate. The process according to the invention has the advantage of producing urethane alkyds, which have a low VOC. Furthermore, said process permits the production of said high solids alkyds in good yield.

The process according to the invention is characterized by the fact that the reaction between the alkyd and the polyisocyanate is performed in the presence of a reactive diluent being inert toward said polyisocyanate. It was surprisingly found that, in the presence of said reactive diluent, the reaction of polyisocyanate could be performed even with high solid alkyds, which are known to be less reactive towards polyisocyanates when the viscosity is too high.

The process according to the invention consists of subjecting an alkyd preferably a hydroxy functional alkyd to the reaction of a polyisocyanate in the presence of a reactive diluent being inert toward said polyisocyanate.

The concept of reactive diluents is known in the art of paints (see e.g. Chapter 6 in High Solids Alkyd Resins, K. Holmberg, Dekker, 1987). The reactive diluents reduce the viscosity of the paint during application but are, unlike a conventional solvent, subsequently incorporated into the polymeric network during the drying process.

In an embodiment of the present invention, reactive diluents suitable for the present process are inert toward said polyisocyanate. The reactive diluent useful in the present invention preferably has little or no active hydrogen such as hydroxyl, acid, amine, and thiol function, and thereby very low hydroxyl and acid index. In another embodiment, said reactive diluent has an hydroxyl index of less than 10 mg KOH/g, preferably less than 3 mg KOH/g, more preferably less than 1 mg KOH/g.

In another embodiment, the reactive diluent suitable in the process according to the present invention may have low volatility and low viscosity i.e. less than 20 centistokes (mm²/sec), and usually in the order of 10-100 centiStokes.

In the process according to the present invention an alkyd is reacted with a polyisocyanate in the presence of a reactive diluent being inert toward said polyisocyanate. The urethane alkyd may make up from 50 to 95 % by weight of the liquid resin, and for example from 80 to 90 % by weight.

The reactive diluents can be employed individually or as a mixture, and in particular in a amount ranging from 5 % to 90 % by weight, preferably from 10 % to 50 % by weight, more preferably from 15 % to 40 % by weight.

The alkyds useful in the process according to the present invention are preferably hydroxy functional alkyds. The hydroxyl index of the alkyd can be at least 15 mg KOH/g. In an embodiment said hydroxyl index can be at least 20 mg KOH/g. In another embodiment said hydroxyl index can be less than 200 mg KOH/g. In yet another embodiment said hydroxyl index can be less than 170 mg KOH/g and more preferably less than 150 mg KOH/g.

The acid index of the alkyd to be used in the present process may be preferably minimised, and can be lower than 10 mg KOH/g and preferably lower than 3 mg KOH/g.

Said hydroxy-functional alkyds can be obtained by reaction or polycondensation of (a) one or more polyols (b) one or more polycarboxylic acids and (c) one or more monocarboxylic acids.

Highly suitable polycarboxylic acids useful in the preparation of the alkyd for use in the present invention are for instance, dicarboxylic or tricarboxylic acids and the corresponding anhydrides. Such polycarboxylic acids may be aliphatic, cycloaliphatic or aromatic. Representative, non-limiting examples of these polycarboxylic acids are, phthalic acid or anhydride, isophthalic acid, terephthalic acid, maleic acid or anhydride, fumaric acid, itaconic acid or anhydride, succinic acid or anhydride, adipic acid, sebacic acid, azelaic acid, citric acid, trimellitic acid or anhydride, pyromellitic acid or dianhydride, tetrahydrophthalic acid or anhydride, endomethylene tetrahydrophthalic acid or anhydride, cyclohexane dicarboxylic acid, glutaric acid, dodecane dioic acid, isomeric benzene tricarboxylic acids, isomeric naphthalene tricarboxylic acid, and dimer-fatty acid. In addition, mixtures of acids may be used. Among these polycarboxylic acids, phthalic acid or anhydride, isophthalic acid, terephthalic acid, trimellitic acid, pyromellitic acid, adipic acid, sebacic acid, maleic acid, fumaric acid, succinic acid, glutaric acid and tetrahydrophthalic acid or anhydride are particularly preferred. More preferably, said polycarboxylic acid is phthalic anhydride.

Non-limiting examples of suitable polyol compound useful in the present process are amongst others: glycerol, trimethylol propane, trimethylol ethane, pentaerythritol, ethylene glycol, 1,3-propanediol, 1,4-butanediol, 1.6-hexanediol, 3-methyl-1,5-pentanediol, diethylene glycol, triethylene glycol, dipropylene glycol, 1,2-propanediol, 1,2-butanediol, 1,3-butanediol, neopentyl glycol, 2-butyl-2-ethyl-1,3-propanediol, hydroxypivaloyl hydroxypivalate, polyethylene glycol, polypropylene glycol, ethoxylated bisphenol-A having 2-12 ethylene oxide units, propoxylated bisphenol-A having 2-12 propylene oxide units, dipentaerythritol, and sorbitol. Among these polyols, glycerol, trimethylol propane, trimethylol ethane, pentaerythritol, neopentyl glycol, 2-butyl-2-ethyl-1,3-propane-diol, and hydroxypivaloyl hydroxypivalate are particularly preferred. These polyols compounds are used either individually or in combination of two or more.

Non-limiting examples of monocarboxylic acids finding use herein are mixtures of saturated, mono, di-, tri-unsaturated conjugated or non-conjugated monocarboxylic acids. The carboxylic acids have usually at least 10 carbon atoms, typically about 10 to 24, preferably about 16 to 22 atoms and most preferably from 18 to 20 carbon atoms. Dimers having from 36 to 44 carbon atoms and trimers having from 44 to 66 carbon atoms may also be used. Examples of suitable monocarboxylic acids are fatty acids. They can be typically used in the form of mixtures of fatty acids derived from natural or synthetic oils.

The fatty acids suitable in the alkyd preparation can be unsaturated or saturated. The fatty acids, or derivative thereof suitable herein are non-drying, semi-drying and drying fatty acids typically used in the form of mixtures of fatty acids derived from natural or synthetic oils. By non-drying, semi-drying and drying fatty acids is meant fatty acids that have the same aliphatic chain composition as the oils they are derived from. The classification of the oils is based on the iodine number; for drying oil the iodine number is >140; for semi-drying oil the iodine number is ranging between 125 and 140, and for non-drying oil the iodine number is <125 ("Surface Coatings", by Swaraj Paul, John Wiley and Sons; p.89). In an embodiment said fatty acid, or derivative thereof suitable herein are preferably unsaturated. Unsaturated fatty acids moiety finding use herein are ethylenically unsaturated conjugated or non conjugated long chain, having at least 6 carbon atoms, typically at least 10 carbon atoms, more typically about 10 to about 24, preferably about 16 to about 22 carbon atoms and most preferably about 18 to about 20, such as oleic, ricinoleic, linoleic, linolenic, licanoic acid and eleostearic acids or mixture thereof. According to an embodiment, suitable fatty acids or derivative thereof may have an iodine number of at least 100 and preferably between 100 and 140 expressed in terms of the number of centigrams of iodine per gram of fatty acids (e.g. ASTM test method D-1959). For example, said fatty acids may have an iodine number greater than 125 (semi-drying) or 140 (drying). Typical but non-limiting examples of unsaturated fatty acids useful in the preparation of the alkyd to be used according to the invention are: calendula oil fatty acid, dehydrated castor oil fatty acid, corn oil fatty acid, cottonseed oil fatty acid, herring oil fatty acid, lard fatty acid, linseed oil fatty acid, mustard seed fatty acid, olive oil fatty acid, peanut oil fatty acid, palm oil fatty acid, sesame oil fatty acid, rapeseed oil fatty acid, rice bran oil fatty acid, safflower fatty acid, sardine oil fatty acid, sesame oil fatty acid, soya bean oil fatty acid, sunflower oil fatty acid, tall oil fatty acid, tallow oil fatty acid, tung oil fatty acid, veronia oil fatty acid, and mixtures thereof. Examples of suitable natural oils include but are not limited to safflower, tall oil, calendula oil, rapeseed oil, peanut oil, soya bean oil, tung oil, linseed oil, sardine oil, herring oil, sesame oil, olive oil, dehydrated castor oil, tallow oil, sunflower oil, cottonseed oil and mixtures thereof.

Examples of fatty acids/oils having a low degree of unsaturation include Coconut oil, Babassu oil, Chinese Tallow oil, Ouri-Curl oil, Palm Kernel oil, caprylic acid, caproic acid, capric acid, coconut fatty acid, lauric acid, myristic acid, palmitic acid, and stearic acid, or mixtures thereof.

The alkyd may be preferably prepared by an esterification reaction. The reaction can be carried out at elevated temperatures, e.g. from about 100 to about 300 °C for 30 min to 36 hours, optionally in an inert atmosphere and optionally under reduced pressure. Catalysts that can suitably used in this polycondensation reaction include alkali and alkali earth metal (m)ethoxides, hydrides and carbonates. The water produced by the reaction can be removed by methods known in the art, for example, using a Dean-stark apparatus.

The acid index of the alkyd to be used in the present process can be minimised by monitoring the reaction until an acid lower than 10 mg KOH/g is obtained and preferably lower than 3 mg KOH/g.

The reaction may be performed in the presence of a suitable catalyst. Said catalyst may, for example, be an inorganic acid such as hydrochloric acid, nitric acid, sulfuric acid or phosphoric acid, an organic acid such as acetic acid, paratoluenesulfonic acid, formic acid or an alkaline catalyst such as potassium hydroxide, sodium hydroxide, calcium hydroxide or ammonia, an organic metal, a metal alkoxide, an organic tin catalyst such as dibutyltin oxide, dioctyltin oxide, dibutyltin dilaurate, dibutyltin dioctiate, monobutyltin trichloride or dibutyltin diacetate, or a boron compound such as boron butoxide or boric acid. Illustrative examples of metal alkoxide include aluminum triethoxide, aluminum triisopropoxide, aluminum tributoxide, aluminum tri-sec-butoxide, aluminum diisopropoxy-sec-butoxide, aluminum diisopropoxyacetyl acetonate, aluminum di-sec-butoxyacetyl acetanoate, aluminum diisopropoxyethyl acetoacetate, aluminum di-sec-butoxyethylacetoacetate, aluminum trisacetyl acetonate, aluminum trisethylaceto acetate, aluminum acetylacetonate bisethylacetoacetate, titanium tetraethoxide, titanium tetraisopropoxide, titanium (IV) butoxide, titanium diisopropoxybisacetyl acetonate, titanium diisopropoxybisethyl acetoacetate, titanium tetra-2-ethylhexyloxide, titanium diisopropoxybis(2-ethyl-1,3-hexanediolate), titanium dibutoxybis(triethanolaminate), zirconium tetrabutoxide, zirconium tetraisopropoxide, zirconium tetramethoxide, zirconium tributoxide monoacetylacetonate, zirconium dibutoxide bisacetylacetonate, zirconium butoxide trisacetylacetonate, zirconium tetraacetylacetonate, zirconium tributoxide monoethylacetoacetate, zirconium dibutoxide bisethylacetoacetate, zirconium butoxide trisethylacetoacetate and zirconium tetraethylacetoacetate. Among these compounds, organotin catalysts are used preferably. According to an embodiment, the catalyst is dibutyltin oxide.

The process according to the invention consists of subjecting an alkyd as described above to the action of a polyisocyanate in the presence of a reactive diluent.

The reactive diluent useful in the present invention has preferably little or no active hydrogen such as hydroxyl, acid, amine, and thiol function, and thereby very low hydroxyl and acid index. In another embodiment, said reactive diluent has an hydroxyl index of less than 10 mg KOH/g, preferably less than 3 mg KOH/g, more preferably less than 1 mg KOH/g.

The reactive diluents can be employed individually or as a mixture, and in particular in a amount ranging from 5 % to 90 % by weight, preferably from 10 % to 50 % by weight, more preferably from 15 % to 40 % by weight.

Non limiting examples of reactive diluents suitable in the present process include vegetable oils, such as air drying vegetable oils or tall oil esters; esters or hyper-branched esters of fatty acids such as fatty acid ester of a polyalcohol allyl ether of formula: R¹-COOR², wherein R¹ is an alkyl radical with 10-24 carbon atoms and at least one non-terminal ethylenically unsaturated bond and R² is an organic group comprising one or more allyl ether terminal groups. Other examples of suitable reactive diluents include methyl ester derivative of wood oil (tung oil) or calendula oil; high boiling (meth)acrylates reactive diluents (such as recommended for UV-curing coating systems); dialkyl fumarates, such as diethyl fumarate; esters of allylic alcohols such as 2-(2-ethyl hexenyloxy) di-(2-ethyl hexenyl) succinate, di-(2-ethyl hexenyl) fumarate, di-(2-ethyl hexenyl) maleate, 2-(2-octenyloxy) di-(2-octenyl) succinate, di-(2-octenyl) fumarate and di-(2-octenyl) maleate; esters of 2,7-octadienol such as 2-(2,7-octadienoxy) di-(2,7-octadienyl) succinate; or mixture of 2-(2,7-octadienoxy) di-(2,7-octadienyl) succinate, and di-(2,7-octadienyl) fumarate and di-(2,7-octadienyl) maleate; mixture of 2-(2-ethylhexenoxy) di-(2-ethylhexenyl) succinate, and di-(2-ethylhexenyl) fumarate, di-(2-ethylhexenyl) maleate; terpene dimers derived from monoterpene or mixture thereof, such as dimers of alpha pinene, beta pinene, limonene, or other monoterpenes containing at least one double bond; trimellitates; unsaturated fatty esters of polyethers; citraconimides or itaconimides such as N-benzyl citraconimide, N-octyl citraconimide, N-(2-hydroxyethyl)citraconimide and N-(3-methoxypropyl)citraconimide; commercial products sold under the names DILULIN^{™} (Cargill), VERSADIL^{™}(Nevchem), RADIA^{™} (Oleon) and the like.

Other examples of reactive diluents suitable in the present invention are described in EP 0 357 128 EP 0 685 543, WO 88/10287, US Pat. No. 4,282,124, WO 95/12641, WO 97/02229, WO 97/02230, WO 97/02326, WO 98/00387, WO 98/00388, US Pat. No. 5,723,709, US Pat. No. 5,370,939, GB 2 306 168, WO 02/34843; in K.H. Zabel et al. Proc. XXIVth Internat. Conf. Organic Coat. Sci. Technol., Athens, 6/10 July 1998, pp481-501; all of which are incorporated by reference.

Highly suitable polyisocyanates useful in the preparation of the urethane alkyd according to the invention can be aliphatic, cycloaliphatic or aromatic and include polyisocyanate compounds containing at least two, preferably two, isocyanate groups per molecule. In a preferred embodiment, said polyisocyanate is a diisocyanate.

As such, aliphatic, alicyclic and aromatic diisocyanate compounds are conveniently used. Suitable non-limiting examples of diisocyanates include 3,3'-dimethoxy -4,4'-biphenylene diisocyanate, hexamethylene diisocyanate, lysine diisocyanate; 1,4-cyclohexane diisocyanate, . 4,4'-dicyclohexylmethane diisocyanate, methylcyclohexylene diisocyanate and isopropylidenedicyclohexyl-4,4'-diisocyanate; 2,4-toluene diisocyanate, 2,6-toluene diisocyanate, 1,3-xylylene diisocyanate, 1,4-xylylene diisocyanate, 1,5-naphthalene diisocyanate, m-phenylene diisocyanate, p-phenylene diisocyanate, 3,3'-bitolylene-4,4'-diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, 1,6-hexane diisocyanate, isophorone diisocyanate, 2,2,4-trimethylhexamethylene diisocyanate, bis(2-isocyanate-ethyl) fumarate, 6-isopropyl-1,3-phenyl diisocyanate, 4-diphenylpropane diisocyanate, lysine diisocyanate, hydrogenated diphenylmethane diisocyanate, hydrogenated xylylene diisocyanate, tetramethylxylylene diisocyanate, and 2,5(or 6)-bis(isocyanatomethyl)-bicyclo[2.2.1]heptane. Among these diisocyanates, toluene diisocyanate, isophorone diisocyanate, xylylene diisocyanate, are particularly preferred. More preferably, said diisocyanate is toluene diisocyanate. These diisocyanate compounds are used either individually or in combination of two or more.

The present process can be applicable to all diisocyanates, but more preferably to isocyanates having a vapour pressure higher than 10⁻³ mbar at 25 °C.

An example of a suitable diisocyanate is toluene diisocyanate (4-methyl-1,3-phenylene diisocyanate, TDI). A commercial mixture can also be used usually comprising about 80 percent 2,4-tolylene diisocyanate (CAS RN: [584-84-9]) and about 20 percent 2,6-tolylene diisocyanate.

The advantage of this invention lies in the use of a reactive diluent as described above which permits the present process to be carried at low temperature, e.g. from about 50 to about 120 °C. The addition of the polyisocyanate is preferably performed at a temperature ranging from 50 to 80 °C, and more preferably from 60 to 75 °C. Another advantage lies in the safety of the procedure. Furthermore, another advantage is that the reaction permits the preparation of high solid urethane alkyd, without solvent and in high yield.

The reaction progress may be monitored by any suitable analytical method. In a preferred embodiment, the reaction progress is monitored by IR spectroscopy. The disappearance of the NCO band is followed by IR spectroscopy. The obtained urethane alkyd can be further diluted with one or more reactive diluent and optionally with one or more solvent.

The present invention further relates to urethane alkyd, which may be obtainable by the process according to the invention. In another embodiment, the present invention relates to urethane alkyd obtained by the process according to the invention. More in particular the high solid urethane alkyds according to the invention comprise the reaction product of an alkyd with a polyisocyanate compound in the presence of a reactive diluent.

In an embodiment of the present invention said urethane alkyds have a solid content ranging from 70 to 100 %, preferably from 80 to 95 %.

The acid index of the urethane alkyds prepared according to the process of the invention may be lower than 10 mg KOH/g and for example lower than 5 mg KOH/g. In another embodiment, the urethane alkyd may have low viscosity for example less than 200 dPa.s, and for example of the order of 10-80 dPa.s.

The present invention also relates to coating compositions comprising as a resin the urethane alkyds of the present invention. The present invention further encompasses a substrate coated with the composition according to the present invention.

The urethane alkyds prepared according to the present invention are particularly useful as the major resin vehicle in coatings and paints. The present invention also relates to the use of urethane alkyds according to the present invention as a binder in paints or, transparent stains and varnishes.

The urethane alkyds according to the invention may be formulated into coating compositions, especially high solids coating compositions, such as varnish, woodstain or paint. The paints may optionally comprise various non-film-forming components such as pigments, extenders, corrective and constructive additives and liquid carriers. The varnishes may optionally comprise extenders, corrective and constructive additives and liquid carriers. Non-limiting examples of such materials include: inorganic and organic pigments, extenders (talc, calcium carbonate, quartz fillers, silica's...), siccatives, anti-skinning agents, pigment and substrate wetting agents, matting agents, anti-sagging agents, anti-oxidants, bactericides, fungicides, foam suppressing agents, slip agents, flow and levelling agents, UV-absorbers, HALSradical scavengers, corrosion inhibitors, waxes, anti-crater additives, organic solvents and water.

The present invention further relates to coating compositions comprising as a binder a urethane alkyd according to the invention and at least one drier or siccative.

Non-limiting examples of suitable driers or siccatives, include carboxylates or alkoxylates of alkali, alkali-earth, transition and rare earth metals. Typical examples are metal salts in which the anion is, for example, naphtenic acid, 2-ethyl-hexanoic acid, neodecanoic acid, decanoic acid, dodecanoic acid, isocarboxylic acid, sebacic and linolenic acid. Cobalt, manganese, iron, lead, zirconium, strontium, aluminium, cerium, vanadium, silver, titanium, calcium, barium, bismuth, zinc, lithium and potassium may be mentioned as suitable metals. Other examples of driers include inorganic or organic metal compounds, such as oxides, hydroxides, phosphates, carbonates, sulphates, sebacates, including neutral, acid or basic metal soaps. In terms of their metal content, the driers are used in a proportion ranging from 10⁻³ to 4% by weight, relative to the binder solids content.

Optionally a liquid carrier can be added to the coating composition in order to reduce the viscosity. The liquid carrier is preferably an organic solvent or diluent such as: white spirits, dearomatised white spirits, higher flash point white spirits, isoparafins, butyl glycol, butyl diglycol, propylene glycol mono methyl ether, dipropylene glycol mono methyl ether, butyl glycol acetate, butyl diglycol acetate and propylene glycol mono methyl ether acetate. Mixtures of solvents may also be used. The solvent is present at such an amount to as to keep the volatile organic compound content below about 350 grams per litre, preferably below about 300, most preferably below about 250 grams per litre of the total coating, at a practical application viscosity. However, the liquid carrier may also be water including a suitable emulsifier, containing the resin in the form of an emulsion.

Preferred compositions of the invention are high-solids formulations and preferable have a solids content between about 60 and about 100% on volume and more preferably between about 70 and about 95% on volume. The organic solvent is typically present at such an amount as to keep the volatile organic compound content below about 350 g/l, preferably below about 250 g/l and most preferable below 230 g/l.

The coating compositions according to the invention are particularly suitable for use as decorative paints. They can be applied in adequately high layer thickness and they have good hiding power and drying properties. The substrate is coated with the coating composition using substantially any technique known to the art. These include spraying, curtain coating, dripping, roller application, printing, brushing, drawing and extrusion

The invention will be more readily understood by reference to the following examples, which are included merely for purposes of illustration of certain aspects and embodiments of the present invention and are not intended to limit the invention.

### Test methods employed

The following properties have been measured for the paint exemplified hereafter:

The low shear paint viscosity was measured with a HAAKE VT181 viscosimeter using a E100 spindle at rotation speed nr. 1 and at 23 °C.

The solids content and VOC level of the formulations are calculated from the percentage solids material of the distinct components and the specific gravity of the solvent used.

The drying stages of the paint formulation were assessed using a BK-drying recorder (Sheen instruments Ltd) at 23 °C and 50 % relative humidity.

The dry film thickness was assessed using a Multinotch Applicator according to ASTM D4400-99 for Sag Resistance of Paints.

The elasticity of the paint film is assessed using the Erichsen cupping test according to ISO 1520. Using a mechanically driven indenter and a lens, the depth of indentation at which the coating starts to crack is established.

### Analytical methods employed:

The acid index was measured according to ASTM method D 1980-87 and the value is expressed in mg KOH/g

The hydroxyl index was measured according to ASTM method D 1957-86 and the value is expressed in mg KOH/g

### Example 1

1575.6 g soya fatty acids, 485.6 g pentaerythritol, 31.1 g glycerin and 317.5 g phthalic anhydride are esterified in the presence of 500 ppm dibytyltin oxide (DBTO) at a temperature of 240°C; water is removed through a column, until an acid index below 5 mg KOH/g is reached. The obtained alkyd has a theoretical hydroxyl index of 137 mg KOH/g. The temperature is then reduced to 150°C and 576.9g of 2-ethyl hexyl fumarate (Radia^{™} 7520 Oleon) is added.

When the mixture is at 70°C, 226.1g of toluene diisocyanate (Desmodur^{™} T80 sold by Bayer as a 80:20 mixture of 2,4 and 2,6 isomers) are added gradually. After addition, the reaction is maintained for 2 hours at 85°C and 1 hour at 110°C. The disappearance of the NCO band is followed by IR spectroscopy.

The obtained urethane alkyd is diluted with 769.2g of a reactive diluent prepared according to the protocol (A) herein and 289.5g of propylene glycol methyl ether (Dowanol^{™} PM).

The final resin has a solid content of 92.7% and a viscosity of 40 dPa.s (Haake, VT500, spindle SV DIN, 23°C); Acid index = 3.9 mg KOH /g and density (23°C) = 1.004.

Protocol (A): Preparation of the reactive diluent: 75.1 parts by weight of fatty acids having an iodine number of 140-150 (according to supplier's specifications) and 15.4 parts by weight of dipentaerythritol were introduced into a reactor and heated at 250°C during one hour in the presence of 0.091 parts by weight of esterification catalyst. After cooling at 70°C, 6.9 parts by weight of isophorone diisocyanate were slowly added, and the reactor was heated at 85°C during 2 hours then at 100°C during one hour. The resulting reactive diluent had an acid index of 2 and an oil length of 88.1%.

### Example 2

630.3 g soya fatty acids, 194.3 g pentaerythritol, 12.5 g glycerin and 127 g phthalic anhydride are esterified in the presence of 500 ppm DBTO at a temperature of 240°C; water is removed through a column, until an acid index below 5 mg KOH/g is reached.

The obtained alkyd has a theoretical hydroxyl index of 137 mg KOH/g. The temperature is then reduced to 150°C and 230.7g of Dilulin^{™} (Cargill, CAS RN = 68213-53-6) are added.

When the mixture is at 70°C, 90.4g of toluene diisocyanate (Desmodur^{™} T80 sold by Bayer as a 80:20 mixture of 2,4 and 2,6 isomers) are added gradually. After addition, the reaction is maintained for 2 hours at 85°C and 1 hour at 110°C. The disappearance of the NCO band is followed by IR spectroscopy.

The obtained urethane alkyd is diluted with 307.7g of a reactive diluent prepared according to the protocol (A) herein and 190.5g of propylene glycol methyl ether (Dowanol^{™} PM).

The final resin has a solid content of 88.9% and a viscosity of 40 dPa.s (Haake, VT500, spindle SV DIN, 23°C); Acid index = 3.3 mg KOH /g and density (23°C) = 1.002.

### Example 3

Preparation of a white paint based on urethane-alkyd from example 1. The following ingredients were mixed, dispersed and ground in the usual manner:

| Components | Percentage |
|---|---|
| Urethane-alkyd from example 1 | 33.975 |
| Organic solvent | 3.121 |
| Wetting agent | 1.011 |
| Extender | 23.257 |
| TiO₂ | 27.301 |
| Organic solvent | 3.121 |
| Calcium octoate 10% | 1.545 |
| Zirconiumsiccatol 18% | 1.196 |
| Cobaltsiccatol 10% | 0.293 |
| Anti-skinning agent | 0.594 |
| Additives | 0.425 |
| Organic solvent | 4.161 |
| | 100.000 |

Theoretical solids content: 84.96% by weight, and 71.59% by volume.

The resulting paint had a density of 1.508 g/ml, a viscosity of 9.5 dPa.s at 23°C (measured with a Haake VT181 viscosimeter, using a spindle E100 at rotation speed nr.1), a Pigment Volume Concentration (PVC) of 31.6%, a fineness comprised between 0.035 and 0.040 mm and contained 226 g of volatile organic compounds (VOC) per litre.

The paint could be applied in layers of maximum thickness of at least 0.04 mm without sagging (maximum dry film thickness according to ASTM test method D4400-99).

The drying properties were measured at 23°C and 50% relative humidity with a BK drying recorder (Sheen Instruments Ltd) in accordance with ASTM D 5895 - 01. The paint film was applied with a BA-30 (Bird applicator) with a gapsize of 150 microns. Drying results:

| | |
|---|---|
| Stage 1 | 4 hours |
| Stage 2 | 6 hours, 45 minutes (from starting point) |
| Stage 3 | 12 hours (from starting point) |

Through-drying of the paint after 16-24h drying at 23 °C and 50 % relative humidity can be considered as good. The drying properties of this paint are comparable to conventional long oil alkyd paints, and to conventional long oil high solids alkyd paints.

In a cupping test according to ISO-1520, using a mechanically driven indenter and a lens, the depth of indentation at which the coating started to crack was at a minimum of 6.5 mm.

The compositions according to the invention, display good drying properties.The visual determination of yellowing properties showed no difference with the best prior art paints.

This example demonstrates that it is possible to make a commercially acceptable paint on the basis of the high solid urethane alkyds of the present invention.

## Claims

1. Process for the preparation of urethane alkyds comprising the steps of reacting an alkyd with a polyisocyanate in the presence of a reactive diluent, **characterized in that** said reactive diluent is inert toward said polyisocyanate.

2. Process according to claim 1, wherein said reactive diluent has little or no active hydrogen.

3. Process according to either of claims 1 or 2, wherein said reactive diluent has an hydroxyl index of less than 10 mg KOH/g, preferably less than 3 mg KOH/g, more preferably less than 1 mg KOH/g.

4. Process according to any of claims 1 to 3, wherein said polyisocyanate is a diisocyanate.

5. Process according to claim 4, wherein said diisocyanate is selected from the group comprising toluene diisocyanate, isophorone diisocyanate, xylylene diisocyanate,

6. Process according to claim 5, wherein said diisocyanate is toluene diisocyanate.

7. Urethane alkyd obtainable by a process according to any of claims 1 to 6.

8. Urethane alkyd comprising the reaction product of an alkyd with a polyisocyanate compound in the presence of a reactive diluent, **characterized in that** the said reactive diluent is inert toward said polyisocyanate.

9. Urethane alkyd according to claim 7 or 8, wherein said urethane alkyd has a solid content ranging from 70 to 100 %, preferably from 80 to 95 %.

10. Urethane alkyd according to any of claims 7 to 9, wherein said urethane alkyd has an acid index lower than 10 mg KOH/g, preferably lower than 3 mg KOH/g.

11. Urethane alkyd according to any of claims 7 to 10, wherein said urethane alkyd has a viscosity lower than 200 mPa.s, and for example of the order of 10-80 mPa.s.

12. Use of a urethane alkyd according to any of claims 7 to 11 as a binder in paints.

13. Use of a urethane alkyd according to any of claims 7 to 11 as a binder in transparent stains and varnishes.

14. Coating composition comprising as a resin the urethane alkyd according to any of claims 7 to 11.

15. A substrate coated with the composition according to claim 12.

## Patentansprüche

1. Verfahren zur Herstellung von Urethan- Alkydharzen, bei dem in Gegenwart eines reaktiven Verdünnungsmittels eine Reaktion zwischen einem Alkyd und einem Polyisocyanat herbeigeführt wird, **dadurch gekennzeichnet, dass** das reaktive Verdünnungsmittel dem genannten Polyisocyanat gegenüber inert ist.

2. Verfahren nach Anspruch 1, bei dem das genannte reaktive Verdünnungsmittel wenig oder keinen aktiven Wasserstoff enthält.

3. Verfahren nach Anspruch 1 oder 2 bei dem das genannte reaktive Verdünnungsmittel eine Hydroxylzahl von weniger als 10 mg KOH/g aufweist, vorzugsweise weniger als 3 mg KOH/g, besser noch weniger als 1 mg KOH/g.

4. Verfahren nach einem der Ansprüche 1 bis 3, bei dem das genannte Polyisocyanate ein Diisocyanat ist.

5. Verfahren nach Anspruch 4, bei dem das genannte Diisocyanat aus der Gruppe Toluen-Diisocyanate, Isophoron-Diisocyanate, Xylylen-Diisocyanate gewählt wird.

6. Verfahren nach Anspruch 5, bei dem das genannte Diisocyanate Toluen-Diisocyanate ist.

7. Gewinnung von Urethan mittels eines Verfahrens nach einem der Ansprüche 1 bis 6.

8. Urethan, das das Reaktionsprodukt eines Alkyds mit einer Polyisocyanat-Verbindung in Gegenwart eines reaktiven Verdünnungsmittels enthält, **dadurch gekennzeichnet, dass** das genannte reactive Verdünnungsmittel dem genannten Polyisocyanat gegenüber inert ist.

9. Urethan nach Anspruch 7 oderr 8, bei dem das genannte Urethan einen Feststoffgehalt zwischen 70 und 100 % aufweist, vorzugsweise 80 bis 95 %.

10. Urethan nach einem der Ansprüche 7 bis 9, bei dem das genannte Urethanalkyd einen Säuregehalt von weniger als 10 mg KOH/g aufweist, vorzugsweise weniger als 3 mg KOH/g.

11. Urethan nach einem der Ansprüche 7 bis 10, bei dem das genannte Urethan eine Viskosität von weniger als 200 mPa s aufweist, z.B. in der Größenordnung von 10 - 80 mPa s.

12. Verwendung von Urethan nach einem der Ansprüche 7 bis 11 als Bindemittel in Anstrichmitteln.

13. Verwendung von Urethan nach einem der Ansprüche 7 bis 11 als Bindemittel in transparenten Beizen (stains) und Lacken.

14. Beschichtung mit Urethan als Harz nach einem der Ansprüche 7 bis 11.

15. Ein mit der Verbindung nach Anspruch 12 beschichtetes Trägermaterial.

## Revendications

1. Procédé de préparation d'alkydes uréthane comprenant les étapes de mise à réagir d'un alkyde avec un polyisocyanate en présence d'un diluant réactif, **caractérisé en ce que** ledit diluant réactif est inerte pour ledit polyisocyanate.

2. Procédé selon la revendication 1, dans lequel le diluant actif a peu ou pas d'hydrogène actif.

3. Procédé selon l'une ou l'autre revendication 1 ou 2, dans lequel ledit diluant réactif a un indice d'hydroxyle de moins de 10 mg KOH/g, de préférence de moins de 3 mg de KOH/g, davantage de préférence de moins de 1 mg KOH/g.

4. Procédé selon l'une quelconque des revendications 1 à 3, dans lequel ledit polyisocyanate est un diisocyanate.

5. Procédé selon la revendication 4, dans lequel ledit diisocyanate est choisi dans le groupe comprenant le diisocyanate de toluène, le diisocyanate d'isophorone, le diisocyanate de xylylène.

6. Procédé selon la revendication 5, dans lequel ledit diisocyanate est le diisocyanate de toluène.

7. Alkyde uréthane que l'on peut obtenir par un procédé selon l'une quelconque des revendications 1 à 6.

8. Alkyde uréthane comprenant le produit de réaction d'un alkyde avec un composé polyisocyanate en présence d'un diluant réactif, **caractérisé en ce que** ledit diluant réactif est inerte pour ledit polyisocyanate.

9. Alkyde uréthane selon la revendication 7 ou 8, dans lequel ledit alkyde uréthane a une teneur en solides se situant dans la plage allant de 70 à 100 %, de préférence de 80 à 95 %.

10. Alkyde uréthane selon l'une quelconque des revendications 7 à 9, dans lequel ledit alkyde uréthane a un indice d'acide inférieur à 10 mg KOH/g, de préférence inférieur à 3 mg KOH/g.

11. Alkyde uréthane selon l'une quelconque des revendications 7 à 10, dans lequel ledit alkyde uréthane a une viscosité inférieure à 20 mPa.s, et par exemple de l'ordre de 10 à 80 mPa.s.

12. Utilisation d'un alkyde uréthane selon l'une quelconque des revendications 7 à 11 comme liant dans les peintures.

13. Utilisation d'un alkyde uréthane selon l'une quelconque des revendications 7 à 11 comme liant dans les colorants et les vernis transparents.

14. Composition de revêtement comprenant comme résine l'alkyde uréthane selon l'une quelconque des revendications 7 à 11.

15. Substrat revêtu avec la composition selon la revendication 12.
